# EUROPÄISCHE PATENTSCHRIFT

(11) **EP 0 694 861 B1**
(45) Veröffentlichungstag und Bekanntmachung des Hinweises auf die Patenterteilung: **11.04.2001**
(21) Anmeldenummer: 95111296.0
(22) Anmeldetag: 19.07.1995
(51) Int. Cl.: G06K 19/077, B60C 13/00, G06K 7/08

(54) **Identifikationsmittel zur Anbringung an Gegenständen, insbesondere an Reifen**
Identification means for fixing onto objects, especially onto tyres
Moyen d'identification pour la fixation sur des objets, en particulier sur des pneumatiques

(30) Priorität: 22.07.1994 DE 4426022
(43) Veröffentlichungstag der Anmeldung: 31.01.1996
(73) Patentinhaber: Continental Aktiengesellschaft, 30165 Hannover (DE)
(72) Erfinder: Spitz, Wolfgang, D-30455 Hannover (DE); Thielemann, Klaus, D-31137 Hildesheim (DE); Schrand, Wilhelm, D-30171 Hannover (DE)

(56) Entgegenhaltungen:
- EP-A- 0 505 905
- EP-A- 0 505 906
- DE-U- 9 300 173

## Beschreibung

Die Erfindung betrifft ein Identifikationsmittel zur Anbringung an Reifen, bestehend aus einem Transponder zur Abspeicherung und Abrufung von Kenndaten des Reifens und aus einem den Transponder umschließenden Container.

Bisher werden die Reifenkennzeichen für Angaben der Dimension, der Geschwindigkeitskategorie oder dergl. bei der Vulkanisation in die Seitenwand eingeprägt. Diese eingeheizten Zeichen sind nur schwer erkennbar und können z.B. durch Verschmutzung unlesbar werden. Besonders nachteilig ist auch, daß die Kennzeichen durch mechanische Beanspruchung (z.B. Abscheuern) unleserlich werden und somit Daten des Reifens (z.B. Herstellungsdaten) verloren gehen. Durch eine Wulst-zu-Wulst-Runderneuerung werden die Reifendaten ebenfalls unkenntlich gemacht. Bei der bisherigen Anbringung der Reifenkennzeichen besteht außerdem der Nachteil, daß die Zeichen (Nummern und Buchstaben) in der Regel nicht maschinell gelesen werden können. Ein weiterer Nachteil ist, daß ein nachträgliches Aufbringen von Daten auf den Reifen relativ kompliziert oder gar unmöglich ist. Die geschilderten Nachteile liegen auch bei Gegenständen auf anderen technischen Gebieten, z. B. bei Förderbändern vor.

Aus der Schrift EP 639472 sind Transponder zur Anbringung an Reifen bekannt, die in zylindrischen Glascontainern, die eine schlagbeständige Ummantelung aufweisen, eingebettet sind. Diese Transponder haben aber den Nachteil, daß sie vor der Vulkanisation des Reifens angebracht werden müssen.

Der EP 0 505 906 A1 ist weiterhin zu entnehmen, daß die Anbringung von Transpondern an Reifen mit Hilfe von "Reifen-Flecken", ähnlichen Materialien oder Vorrichtungen erfolgen kann.

Der Erfindung liegt nun die Aufgabe zugrunde, eine unverwechselbare, dauerhafte und möglichst fälschungssichere Identifikation von Reifen zu ermöglichen, die sowohl vor als auch nach der Vulkanisation aufgebracht werden kann.

Gelöst wird diese Aufgabe erfindungsgemäß dadurch, daß ein Identifikationsmittel aus einem Transponder und einen ihn umschließenden Container besteht, der aus Gummi und/oder hochelastischem Kunststoff besteht, der Drücken bis zu 10 bar und Temperaturen bis zu 150°C standhält und eine Haftvermittlungsschicht zur unlösbaren Befestigung des Containers am Reifen aufweist.

Da in einem Transponder die Daten fälschungssicher gespeichert sind, ist es nicht möglich eine Datenveränderung vorzunehmen. Durch die Erfindung wird das Problem des Anbringens des Transponders an einen Gegenstand in der Art gelöst, daß ein in Glas und/oder Kunststoff gebetteter Transponder zunächst in einen Gummi- und/oder hochelastischen Kunststoffcontainer eingebracht wird, der Container so gestaltet ist, daß er problemlos an Gegenstände angebracht werden kann (mittels einer Haftschicht). Das hat den Vorteil, daß das Identifikationsmittel auch nach der Herstellung eines Artikels (Reifens) noch befestigt werden kann. Der Transponder ist durch die Ummantelung aus Gummi und/oder hochelastischen Kunststoff vor chemischen oder mechanischen Einflüssen geschützt, und somit wird eine zuverlässige Datenspeicherung gewährleistet.

Durch die Anbringung von mindestens einer Sollbruchstelle in den Container soll einer Demontage des Transponders und einem anschließenden Aufbringen an einem anderen Gegenstand entgegengewirkt werden, indem der Container beim Versuch des Entfernens vom Gegenstand zerstört wird.

Der Container selbst kann aus einem einzigen Material hergestellt werden. Weiterhin ist es möglich, eine hochelastische Gehäuseschicht und eine steifere Trägerschicht vorzusehen, die in einem Arbeitsgang produziert werden können, was arbeitstechnischen Vorteil bringt.

Die hochelastische Gehäuseschicht soll den Transponder vor allem vor mechanischer Einwirkung von außen schützen. Die steifere Trägerschicht dient als Transponderunterlage und soll einer Beschädigung des Transponders durch mechanische Einflüsse entgegenwirken.

Eine Haftvermittlungsschicht dient zum einfachen und problemlosen Ankleben des Containers an den Gegenstand.

Die zur Containerherstellung bevorzugt verwendeten Materialien aus Gummi und/oder hochelastischem Kunststoff sind in der Lage, Drücke bis zu 10 bar und Temperaturen bis zu 150° C standzuhalten. Das bringt den Vorteil, daß bei der Vulkanisation von Artikeln aus Gummi (bei Reifen die Runderneuerung) das Identifikationsmittel nicht beschädigt wird.

Der Container kann je nach Einsatzart und Transponderform unterschiedliche Formen aufweisen, z. B. längliche Formen, wie Platten- Stab- oder Zylinderformen. Es sind aber auch kugelähnliche Formen des Containers möglich. Die Gestalt des Identifikationsmittels wird also durch Transponder- und/oder Containerform bestimmt. In der flächenhaften Gestaltung der einzelnen Gummi- oder Kunststoffschichten des Containers kann variiert werden.

Es ist möglich, das Identifikationsmittel an die innere oder äußere Reifenseitenwand zu positionieren.

Eine bevorzugte Ausführungsform der Erfindung besteht darin, daß das Identifikationsmittel an die innere Seitenwand eines Reifens angebracht wird, vorzugsweise klebend durch eine Haftschicht. Wenn die Haftschicht teilweise oder vollständig vorvulkanisiert ist, wäre es auch möglich den Container auf den Artikel aus Gummi (z.B. Reifen) aufzuvulkanisieren. Es sind aber auch andere Befestigungsmöglichkeiten denkbar. Wenn der Transponder eine längliche Form aufweist, so kann er sowohl in Radial- als auch in Umfangsrichtung angebracht werden. In diesem Fall ist es besonders vorteilhaft, wenn die Längsachse des Transponders mit der Reifenumfangsrichtung einen Winkel einschließt, der zwischen 0 und 40° liegt. Bei solch einer Positionierung des Identifikationsmittels (Transponder mit Container) hat sich die Datenspeicherung als besonders sicher herausgestellt.

Der Container umschließt den Transponder vollständig und schützt ihn vor Beschädigungen durch mechanische und chemische Einflüsse, die auf die Reifenoberfläche innen und außen einwirken können. Außerdem wird ein nachträgliches Aufbringen des Transponders an den Gegenstand, in diesem Fall Reifen, möglich. Es ist natürlich auch denkbar, das erfindungsgemäße Identifikationsmittel an Vollreifen anzubringen.

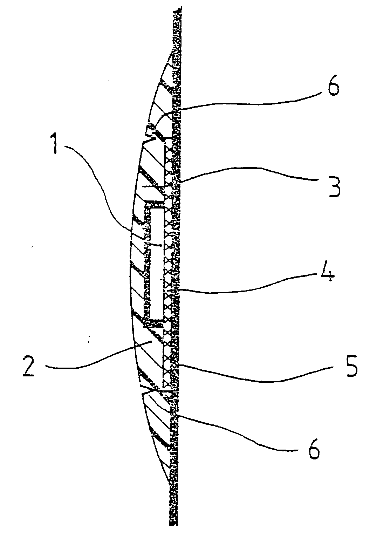

Nachfolgend wird ein Ausführungsbeispiel anhand der Zeichnung gezeigt.

Die Figur stellt das Identifikationsmittel in einem radialen Schnitt dar. Das Identifikationsmittel besteht aus einem Transponder 1 und einem diesen umgebenden Container 2.

Der Transponder 1 dient als Kerndatenspeicher für den Gegenstand (Reifen), an dem er angebracht werden soll. Die Daten werden elektronisch abgespeichert und sind mittels eines Lesegerätes ablesbar. Der Container 2 setzt sich in dem dargestellten Beispiel aus drei Schichten zusammen: einer hochelastischen Gehäuseschicht 3, einer relativ steifen Trägerschicht 4 und einer Haftvermittlungsschicht 5.

Die Gehäuseschicht 3 besteht aus einem Gummi oder hochelastischem Kunststoff. Diese elastische Schicht 3 soll den darunterliegenden Transponder 1 vor mechanischen und chemischen Einflüssen schützen. Die Gehäuseschicht 3 ist mit Sollrißstellen 6, die z.B. durch Materialabschwächung und/oder Einkerbung erzielt werden, versehen. Diese Sollrißstellen 6 können z.B. im Bereich der Enden der Trägerschicht 4 angebracht werden. Die Trägerschicht 4 besteht ebenfalls aus Gummi oder gummiähnlichem Kunststoff und dient als Transponderunterlage. Die Schicht 5 (Haftvermittlungsschicht) stellt die unlösbare Verbindung zwischen Container mit Transponder und Oberfläche des Reifens her. Diese Schicht 5 besteht aus Gummi und/oder Kunststoff, der eine Adhäsion zwischen Gegenstand (Reifen) und Container ermöglicht. Die Verbindungskraft der Schicht 5 zum Reifen und/oder zur Trägerschicht 4 muß stärker sein als die Sollbruchkraft der Gehäuseschicht 3, so daß bei Demontageversuchen der Container und/oder der Transponder zerstört wird, bevor es gelingt, den Container vom Gegenstand (Reifen) abzulösen.

## Patentansprüche

1. Identifikationsmittel zur Anbringung an Reifen, bestehend aus einem Transponder (1) zur Abspeicherung und Abrufung von Kenndaten des Reifens und aus einem den Transponder (1) umschließenden Container (2)
**dadurch gekennzeichnet**,
daß der Container (2)
- aus Gummi und/oder hochelastischem Kunststoff besteht, der Drücken bis zu 10 bar und Temperaturen bis zu 150 °C standhält, und
- eine Haftvermittlungsschicht (5) zur unlösbaren Befestigung des Containers (2) am Reifen aufweist.

2. Identifikationsmittel nach Anspruch 1, dadurch gekennzeichnet, daß die Längsachse des Transponders (1) mit der Reifenumfangsrichtung einen Winkel einschließt, der zwischen 0 und 40° liegt.

3. Identifikationsmittel nach Anspruch 1, dadurch gekennzeichnet, daß der Container (2) mindestens eine Sollbruchstelle (6) aufweist.

4. Identifikationsmittel nach Anspruch 1, dadurch gekennzeichnet, daß der Container (2) aus einem einzigen Material besteht.

5. Identifikationsmittel nach Anspruch 1, dadurch gekennzeichnet, daß der Container (2) aus einer hochelastischen äußeren Gehäuseschicht (3) und einer steiferen Trägerschicht (4) besteht.

6. Identifikationsmittel nach Anspruch 1, dadurch gekennzeichnet, daß der Container (2) platten-, stab- oder zylinderförmig gestaltet ist.

7. Identifikationsmittel nach Anspruch 1, dadurch gekennzeichnet, daß dieses an einer äußeren oder inneren Seitenwand eines Reifens angebracht ist.

## Claims

1. Identifying means for attaching to tyres, comprising a transponder (1) for the storage and recalling of characteristic data of the tyre and comprising a container (2), which surrounds the transponder (1), characterised in that the container (2)
- is formed from rubber and/or a highly resilient plastics material which withstands pressures of up to 10 bar and temperature of up to 150° C, and
- has a bonding agent layer (5) for the non-detachable securement of the container (2) on the tyre.

2. Identifying means according to claim 1, characterised in that the longitudinal axis of the transponder (1) forms, with the circumferential direction of the tyre, an angle which lies between 0 and 40°.

3. Identifying means according to claim 1, characterised in that the container (2) has at least one intended breaking point (6).

4. Identifying means according to claim 1, characterised in that the container (2) is formed from one single material.

5. Identifying means according to claim 1, characterised in that the container (2) comprises a highly resilient external housing layer (3) and a stiffer carrier layer (4).

6. Identifying means according to claim 1, characterised in that the container (2) has a plate-like, bar-like or cylindrical configuration.

7. Identifying means according to claim 1, characterised in that said means is attached to an external or internal sidewall of a tyre.

## Revendications

1. Moyen d'identification destiné à être monté sur des pneumatiques, constitué par un transpondeur (1) servant à mémoriser et à appeler des données caractéristiques de pneumatique et par un récipient (2) entourant le transpondeur (1),
caractérisé en ce que le récipient (2)
- est réalisé en caoutchouc et/ou en une matière plastique très élastique, qui résiste à des pressions atteignant jusqu'à 10 bars et à des températures atteignant jusqu'à 150°C, et
- possède une couche d'adhésif (5) servant à fixer de façon inamovible le récipient (2) au pneumatique.

2. Moyen d'identification selon la revendication 1,
caractérisé en ce que l'axe longitudinal du transpondeur (1) fait avec la direction circonférentielle du pneumatique un angle qui est compris entre 0 et 40°.

3. Moyen d'identification selon la revendication 1,
caractérisé en ce que le récipient (2) comporte au moins un point de rupture de consigne (6).

4. Moyen d'identification selon la revendication 1,
caractérisé en ce que le récipient (2) est réalisé en un seul matériau.

5. Moyen d'identification selon la revendication 1,
caractérisé en ce que le récipient (2) est constitué par une couche extérieure très élastique formant boîtier (3) et par une couche de support plus rigide (4).

6. Moyen d'identification selon la revendication 1,
caractérisé en ce que le récipient (2) est agencé sous la forme d'une plaque, d'un barreau ou d'un cylindre.

7. Moyen d'identification selon la revendication 1,
caractérisé en ce que ce moyen est monté sur une paroi latérale extérieure ou intérieure d'un pneumatique.
